# EUROPEAN PATENT APPLICATION

(11) **EP 4 613 362 A1**
(43) Date of publication of application: **10.09.2025**
(21) Application number: 23886032.4
(22) Date of filing: 26.09.2023
(51) Int. Cl.: B01D 61/46, C02F 1/469

(54) **ELECTRODIALYSIS DEVICE AND METHOD FOR MANUFACTURING SAME**

(30) Priority: 31.10.2022 KR 20220142375
(71) Applicant: POSCO Holdings Inc., Seoul 06194 (KR); Research Institute of Industrial Science & Technology, Pohang-si, Gyeongsangbuk-do 37673 (KR)
(72) Inventor: PARK, Kwang Soo, Seoul 06194 (KR)
(74) Representative: Pfenning, Meinig & Partner mbB
(86) International application number: PCT/KR2023/014917
(87) International publication number: WO 2024/096335

(57) **Abstract**

An electrodialysis device according to one embodiment of the present disclosure includes an ion exchange membrane configured to exchange ions and gaskets provided to be in contact with the ion exchange membrane and configured to seal the ion exchange membrane, in which the gaskets include a first gasket positioned at one side of the ion exchange membrane and a second gasket positioned at the other side of the ion exchange membrane, in which the first gasket includes a first main gasket, and first auxiliary gaskets configured to surround the first main gasket and in which a thermal expansion rate of the first main gasket is lower than a thermal expansion rate of the first auxiliary gasket.

## Description

### [Technical Field]

The present disclosure relates to an electrodialysis device and a method of manufacturing the same, and more particularly, to an electrodialysis device including an ion exchange membrane, and a method of manufacturing the same.

### [Background Art]

An electrodialysis device refers to a device in which cation exchange membranes and anion exchange membranes are alternately arranged, and a direct-current voltage is applied to two opposite ends of the device, such that cations and anions in introduced water (raw water) move while passing through the ion exchange membranes, and desalted water and treated water containing concentrated liquids are alternately produced in cells and released. Typically, the electrodialysis device is used for desalination of seawater and wastewater treatment.

The stacked ion exchange membranes of the electrodialysis device ensure coupling convenience and prevent a solution from leaking to the outside because of press-compression made by a lateral load. In order to seal the ion exchange membrane, gaskets are attached to two opposite sides of the ion exchange membrane to seal the ion exchange membrane.

In general, the gasket is manufactured by adding a small amount of various additive elements to polypropylene (PP). Various additive elements may include fluororubber (FKM), vinyl methyl silicon (VMQ) rubber, ethylene propylene diene (EPDM) rubber, acrylonitrile butadiene rubber (NBR), and the like.

When the electrodialysis device is used over a long period of time, the gasket is thermally expanded in a predetermined temperature section because of the effect of precipitates and the like. When the gasket is expanded, the ion exchange membrane, which is compressed together with the gasket, is also stretched, which degrades ion exchange performance for electrodialysis.

### [Disclosure]

### [Technical Problem]

The present disclosure attempts to provide an electrodialysis device capable of improving a lifespan of an ion exchange membrane by minimizing thermal deformation, and a method of manufacturing the same.

### [Technical Solution]

An electrodialysis device according to one embodiment of the present disclosure includes an ion exchange membrane configured to exchange ions and gaskets provided to be in contact with the ion exchange membrane and configured to seal the ion exchange membrane, in which the gaskets include a first gasket positioned at one side of the ion exchange membrane and a second gasket positioned at the other side of the ion exchange membrane, in which the first gasket includes a first main gasket, and first auxiliary gaskets configured to surround the first main gasket and in which a thermal expansion rate of the first main gasket is lower than a thermal expansion rate of the first auxiliary gasket.

**The** first auxiliary gaskets may include: a first upper auxiliary gasket positioned on an upper portion of the first main gasket; and a first lower auxiliary gasket positioned on a lower portion of the first main gasket, and the first upper auxiliary gasket and the first lower auxiliary gasket may contain the same material.

**The** first main gasket may contain polyethylene terephthalate (PET), and the first auxiliary gasket may contain polypropylene (PP).

The second gasket may include: a second main gasket; and second auxiliary gaskets configured to surround the second main gasket, and a thermal expansion rate of the second main gasket may be lower than a thermal expansion rate of the second auxiliary gasket.

The second auxiliary gaskets may include: a second upper auxiliary gasket positioned on an upper portion of the second main gasket; and a second lower auxiliary gasket positioned on a lower portion of the second main gasket, and the second upper auxiliary gasket and the second lower auxiliary gasket may contain the same material.

In addition, a method of manufacturing an electrodialysis device according to another embodiment of the present disclosure includes: manufacturing a first gasket by multiple injection molding processes; manufacturing a second gasket by multiple injection molding processes; and sealing an ion exchange membrane with the first gasket and the second gasket, in which the manufacturing of the first gasket includes: forming a first lower auxiliary gasket in an injection mold; forming a first main gasket on the first lower auxiliary gasket formed in the injection mold; and forming a first upper auxiliary gasket on the first main gasket formed in the injection mold, and in which a thermal expansion rate of the first main gasket is lower than a thermal expansion rate of the first lower auxiliary gasket or the first upper auxiliary gasket.

The manufacturing of the second gasket may include: forming a second lower auxiliary gasket in the injection mold; forming a second main gasket on the second lower auxiliary gasket formed in the injection mold; and forming a second upper auxiliary gasket on the second main gasket formed in the injection mold, and in which a thermal expansion rate of the second main gasket is lower than a thermal expansion rate of the second lower auxiliary gasket or the second upper auxiliary gasket.

In addition, a method of manufacturing an electrodialysis device according to still another embodiment of the present disclosure includes: manufacturing a first gasket by multiple extrusion processes; manufacturing a second gasket by multiple extrusion processes; and sealing an ion exchange membrane with the first gasket and the second gasket, in which the manufacturing of the first gasket includes: manufacturing a first main gasket base plate and a first auxiliary gasket base plate having a higher thermal expansion rate than the first main gasket base plate; supplying the first main gasket base plate and the first auxiliary gasket base plate to extrusion rollers and heating the first main gasket base plate and the first auxiliary gasket base plate; and supplying the first main gasket base plate and the first auxiliary gasket base plate, which have passed over the extrusion rollers, to bonding rollers and attaching the first main gasket base plate and the first auxiliary gasket base plate.

The manufacturing of the second gasket may include: manufacturing a second main gasket base plate and a second auxiliary gasket base plate having a higher thermal expansion rate than the second main gasket base plate; supplying the second main gasket base plate and the second auxiliary gasket base plate to the extrusion rollers and heating the second main gasket base plate and the second auxiliary gasket base plate; and supplying the second main gasket base plate and the first auxiliary gasket base plate, which have passed over the extrusion rollers, to the bonding rollers and attaching the second main gasket base plate and the first auxiliary gasket base plate.

The extrusion rollers may include: first extrusion rollers configured to extrude the first main gasket base plate; and second extrusion rollers configured to extrude the first auxiliary gasket base plate, the first extrusion roller may be a heating roller configured to heat the first main gasket base plate, and the second extrusion roller may be a combined roller configured to heat or cool the first auxiliary gasket base plate.

The second extrusion rollers may include: a sub-cooling roller configured to cool an outer surface of the first auxiliary gasket base plate; and a sub-heating roller configured to heat an inner surface of the first auxiliary gasket base plate.

The bonding roller may be a cooling roller configured to cool the first main gasket base plate and the first auxiliary gasket base plate.

### [Advantageous Effect]

The electrodialysis device according to the embodiment of the present disclosure may prevent a leak while minimizing thermal deformation, thereby advantageously ensuring sealability.

Therefore, it is possible to suppress thermal deformation of the ion exchange membrane and thus improve the lifespan of the ion exchange membrane.

### [Description of the Drawings]

FIG. 1 is a schematic perspective view of an electrodialysis device according to an embodiment of the present disclosure.
FIG. 2 is a cross-sectional view of FIG. 1.
FIG. 3 is a flowchart sequentially illustrating a method of manufacturing the electrodialysis device according to the embodiment of the present disclosure.
FIG. 4 is a view for explaining a part of the manufacturing method in FIG. 3.
FIG. 5 is a flowchart sequentially illustrating a method of manufacturing the electrodialysis device according to another embodiment of the present disclosure.
FIG. 6 is a view for explaining a part of the manufacturing method in FIG. 5.

### [Mode for Invention]

Hereinafter, embodiments of the present disclosure will be described in detail with reference to the accompanying drawings so that those with ordinary skill in the art to which the present disclosure pertains may easily carry out the embodiments. The present disclosure may be implemented in various different ways, and is not limited to the embodiments described herein.

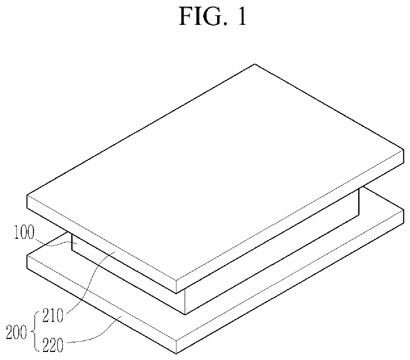

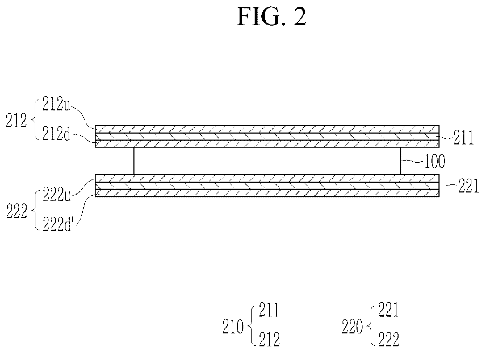

FIG. 1 is a schematic perspective view of an electrodialysis device according to an embodiment of the present disclosure, and FIG. 2 is a cross-sectional view of FIG. 1.

As illustrated in FIGS. 1 and 2, the electrodialysis device according to the embodiment of the present disclosure includes an ion exchange membrane 100, and gaskets 200 provided to be in contact with the ion exchange membrane 100 and configured to seal the ion exchange membrane 100.

The ion exchange membrane 100 may have a structure in which cation exchange membranes and anion exchange membranes are alternately stacked. The ion exchange membrane 100 may include an active region (not illustrated) positioned at a central portion, and an inactive region (not illustrated) configured to surround the active region (not illustrated). The active region (not illustrated) is a region that exhibits ion exchange performance. The active region (not illustrated) may account for 70 to 80% of an area of the ion exchange membrane 100. The ion exchange membrane 100 may contain moisture of about 40%.

The gaskets 200 may include a first gasket 210 positioned at one side of the ion exchange membrane 100, and a second gasket 220 positioned at the other side of the ion exchange membrane 100.

In the present embodiment, for convenience of description, only the first gasket 210 and the second gasket 220 respectively positioned on upper and lower portions of the ion exchange membrane 100 are illustrated. However, the ion exchange membranes 100 and the gaskets 200 may be alternately stacked and installed.

A lower surface of the first gasket 210 may be in contact with the ion exchange membrane 100, and an upper surface of the second gasket 220 may be in contact with the ion exchange membrane 100, which may prevent a solution in the ion exchange membrane 100 from leaking to the outside.

The first gasket 210 may include a first main gasket 211, and first auxiliary gaskets 212 configured to surround the first main gasket 211.

In this case, a thermal expansion rate of the first main gasket 211 may be lower than a thermal expansion rate of the first auxiliary gasket 212. Therefore, it is possible to minimize thermal deformation and ensure physical properties of the first gasket 210 that are advantageous in terms of sealability. That is, the first main gasket 211 is made of a material capable of withstanding pressure and having a low thermal expansion rate, such that the first main gasket 211 may minimize thermal deformation and withstand pressure. Further, the first auxiliary gasket 212, which surrounds the first main gasket 211 and is exposed to the outside, is made of a material having a high thermal expansion rate, and a surface of the first auxiliary gasket 212 is softened, such that the first auxiliary gasket 212 may be tightly attached and advantageous in terms of sealability.

The first main gasket 211 may contain polyethylene terephthalate (PET), and the first auxiliary gasket 212 may contain polypropylene (PP). However, the present disclosure is not necessarily limited thereto. Various materials may be applied.

**The** first auxiliary gaskets 212 may include a first upper auxiliary gasket 212u positioned on an upper portion of the first main gasket 211, and a first lower auxiliary gasket 212d positioned on a lower portion of the first main gasket 211. **In** this case, the first upper auxiliary gasket 212u and the first lower auxiliary gasket 212d may contain the same material. For example, the first upper auxiliary gasket 212u and the first lower auxiliary gasket 212d may contain polypropylene (PP).

**The** second gasket 220 may include a second main gasket 221, and second auxiliary gaskets 222 configured to surround the second main gasket 221.

**In** this case, a thermal expansion rate of the second main gasket 221 may be lower than a thermal expansion rate of the second auxiliary gasket 222. Therefore, it is possible to minimize thermal deformation and ensure physical properties of the second gasket 220 that are advantageous in terms of sealability. **That** is, the second main gasket 221 is made of a material capable of withstanding pressure and having a low thermal expansion rate, such that the second main gasket 221 may minimize thermal deformation and withstand pressure. Further, the second auxiliary gasket 222, which surrounds the second main gasket 221 and is exposed to the outside, is made of a material having a high thermal expansion rate, such that a surface of the second auxiliary gasket 222 may be softened.

The second main gasket 221 may contain polyethylene terephthalate (PET), and the second auxiliary gasket 222 may contain polypropylene (PP). However, the present disclosure is not necessarily limited thereto. Various materials may be applied.

The thermal expansion rate is calculated by Length x Coefficient of thermal expansion x Temperature change rate. A coefficient of thermal expansion of polyethylene terephthalate (PET) may be 250 um/(m·°C), and a coefficient of thermal expansion of polypropylene (PP) may be 413 um/(m·°C).

The second auxiliary gaskets 222 may include a second upper auxiliary gasket 222u positioned on an upper portion of the second main gasket 221, and a second lower auxiliary gasket 222d positioned on a lower portion of the second main gasket 221. In this case, the second upper auxiliary gasket 222u and the second lower auxiliary gasket 222d may contain the same material. For example, the second upper auxiliary gasket 222u and the second lower auxiliary gasket 222d may contain polypropylene (PP).

As described above, the gaskets 200 of the electrodialysis device according to the embodiment of the present disclosure include the first gasket 210 and the second gasket 220, the first gasket 210 includes the first main gasket 211, and the first auxiliary gaskets 212 having a thermal expansion rate higher than a thermal expansion rate of the first main gasket 211, and the second gasket 220 includes the second main gasket 221, and the second auxiliary gaskets 222 having a thermal expansion rate higher than a thermal expansion rate of the second main gasket 221, such that the gaskets 200 may prevent a leak while minimizing thermal deformation and advantageously ensure sealability. Therefore, it is possible to suppress thermal deformation of the ion exchange membrane 100 and improve the lifespan of the ion exchange membrane 100.

Meanwhile, a method of manufacturing the electrodialysis device according to the embodiment will be described below in detail with reference to the drawings.

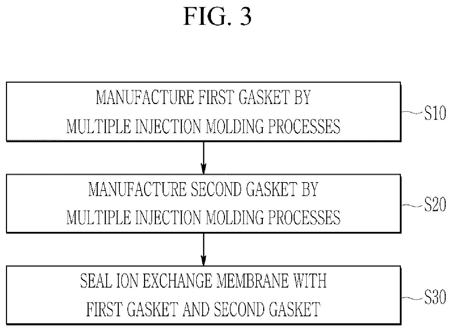

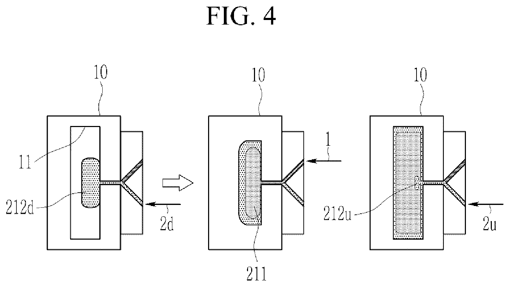

FIG. 3 is a flowchart sequentially illustrating the method of manufacturing the electrodialysis device according to the embodiment of the present disclosure, and FIG. 4 is a view for explaining a part of the manufacturing method in FIG. 3.

As illustrated in FIG. 3, the method of manufacturing the electrodialysis device according to the embodiment of the present disclosure manufactures the first gasket 210 by multiple injection molding processes first (S10).

Hereinafter, a method of manufacturing the first gasket by the multiple injection molding processes will be described in detail.

As illustrated in FIG. 4, the first lower auxiliary gasket 212d is formed in an injection frame 11 by injecting a first lower auxiliary gasket material 2d into an injection mold 10. Further, the first main gasket 211 is formed by injecting a first main gasket material 1 onto the first lower auxiliary gasket 212d formed in the injection mold 10. Further, the first upper auxiliary gasket 212u is formed by injecting a first upper auxiliary gasket material 2u onto the first main gasket 211 formed in the injection mold 10.

In this case, a thermal expansion rate of the first main gasket 211 may be lower than a thermal expansion rate of the first lower auxiliary gasket 212d or the first upper auxiliary gasket 212u. Therefore, it is possible to manufacture the first gasket 210 that minimizes a leak while minimizing thermal deformation.

Next, the second gasket 220 is manufactured by the multiple injection molding processes identical to the multiple injection molding processes of the method of manufacturing the first gasket 210 (S20). That is, the second lower auxiliary gasket 222d is formed in the injection frame 11 by injecting a second lower auxiliary gasket material into the injection mold 10. Further, the second main gasket 221 is formed by injecting a second main gasket material onto the second lower auxiliary gasket 222d formed in the injection mold 10. Further, the second upper auxiliary gasket 222u is formed by injecting a second upper auxiliary gasket material onto the second main gasket 221 formed in the injection mold 10.

In this case, a thermal expansion rate of the second main gasket 221 may be lower than a thermal expansion rate of the second lower auxiliary gasket 222d or the second upper auxiliary gasket 222u. Therefore, it is possible to manufacture the second gasket 220 that minimizes a leak while minimizing thermal deformation.

Next, the electrodialysis device is manufactured by sealing the ion exchange membrane 100 with the first gasket 210 and the second gasket 220 (S30).

As described above, the first lower auxiliary gasket 212d or the first upper auxiliary gasket 212u may be attached to the first main gasket 211 by using the multiple injection molding processes without a separate bonding agent, such that the manufacturing process may be simplified, and a bonding force between the first lower auxiliary gasket 212d or the first upper auxiliary gasket 212u and the first main gasket 211 may be increased.

In addition, it is possible to manufacture the gasket, which prevents a leak while minimizing thermal deformation, by using the multiple injection molding processes. Therefore, it is possible to suppress thermal deformation of the ion exchange membrane 100 and improve the lifespan of the ion exchange membrane 100.

Meanwhile, in the embodiment, the first gasket or the second gasket is manufactured by using the multiple injection molding processes. However, in another embodiment, the first gasket or the second gasket may be manufactured by using multiple extrusion processes.

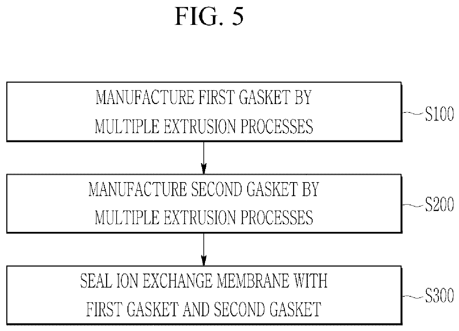

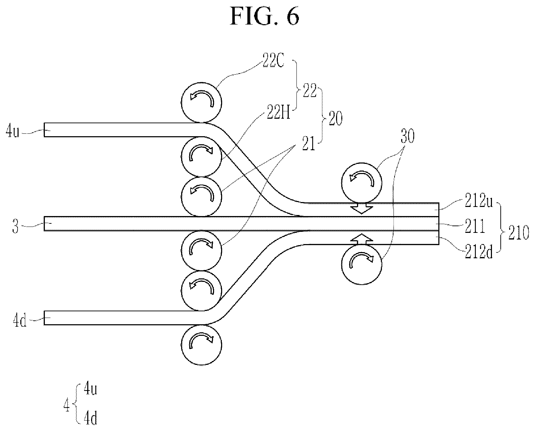

Hereinafter, the method of manufacturing the electrodialysis device according to another embodiment of the present disclosure will be described in detail with reference to FIGS. 5 and 6.

FIG. 5 is a flowchart sequentially illustrating a method of manufacturing the electrodialysis device according to another embodiment of the present disclosure, and FIG. 6 is a view for explaining a part of the manufacturing method in FIG. 5.

As illustrated in FIG. 5, the method of manufacturing the electrodialysis device according to another embodiment of the present disclosure manufactures the first gasket 210 by multiple extrusion processes first (S100).

Hereinafter, a method of manufacturing the first gasket by the multiple extrusion processes will be described in detail.

As illustrated in FIG. 6, a first main gasket base plate 3 and first auxiliary gasket base plates 4, which have a higher thermal expansion rate than the first main gasket base plate 3, are manufactured. The first main gasket base plate 3 may contain polyethylene terephthalate (PET), and the first auxiliary gasket base plate 4 may contain polypropylene (PP). The first auxiliary gasket base plates 4 may include a first upper auxiliary gasket base plate 4u and a first lower auxiliary gasket base plate 4d.

Further, the first main gasket base plate 3 and the first auxiliary gasket base plate 4 are supplied to extrusion rollers 20 and heated.

In this case, the extrusion rollers 20 may include first extrusion rollers 21 configured to extrude the first main gasket base plate 3, and second extrusion rollers 22 configured to extrude the first auxiliary gasket base plates 4.

The first extrusion roller 21 may be a heating roller configured to heat the first main gasket base plate 3. Therefore, a surface of the first main gasket base plate 3 is heated to a temperature of 100 to 160 degrees by using the first extrusion rollers 21, such that the first main gasket base plate 3 may be in an attachable state. A heating coil may be disposed on a lateral surface of the first extrusion roller 21, and the first main gasket base plate 3 may be heated by induction heating. Alternatively, a heating element may be disposed in the first extrusion roller 21 and heat the first main gasket base plate 3. However, the method of heating the first extrusion roller 21 is not necessarily limited thereto, and various structures may be applied.

Further, the second extrusion roller 22 may be a combined roller configured to heat or cool the first auxiliary gasket base plate 4. The second extrusion rollers 22 may include a sub-cooling roller 22C configured to cool an outer surface of the first auxiliary gasket base plate 4, and a sub-heating roller 22H configured to heat an inner surface of the first auxiliary gasket base plate 4.

The sub-heating roller 22H may be used to heat the inner surface of the first auxiliary gasket base plate 4 so that the first auxiliary gasket base plate 4 may be in a state in which the first auxiliary gasket base plate 4 may be attached, and the sub-cooling roller 22C may be used to cool the outer surface of the first auxiliary gasket base plate 4 so that the first auxiliary gasket base plate 4 may be in a state in which the first auxiliary gasket base plate 4 may be pressed.

Further, the first main gasket base plate 3 and the first auxiliary gasket base plates 4, which have passed over the extrusion rollers 20, are supplied to bonding rollers 30 and attached to one another. The bonding rollers 30 may be cooling rollers configured to cool the first main gasket base plate 3 and the first auxiliary gasket base plates 4. As described above, the bonding rollers 30 may be used to cool and press the first main gasket base plate 3 and the first auxiliary gasket base plates 4 and attach the first main gasket base plate 3 and the first auxiliary gasket base plates 4, such that the first gasket 210 including the first main gasket 211 and the first auxiliary gaskets 212 may be manufactured.

Next, the second gasket 220 is manufactured by the multiple extrusion processes identical to the multiple extrusion processes of the method of manufacturing the first gasket 210 (S200).

A second main gasket base plate and second auxiliary gasket base plates, which have a higher thermal expansion rate than the second main gasket base plate, are manufactured. The second auxiliary gasket base plates may include a second upper auxiliary gasket base plate and a second lower auxiliary gasket base plate. Further, the second main gasket base plate and the second auxiliary gasket base plates are supplied to the extrusion rollers 20 and heated. Further, the second main gasket base plate and the second auxiliary gasket base plates, which have passed over the extrusion rollers 20, are supplied to the bonding rollers 30 and attached to one another.

Next, the electrodialysis device is manufactured by sealing the ion exchange membrane 100 with the first gasket 210 and the second gasket 220 (S300).

As described above, the first lower auxiliary gasket 212d or the first upper auxiliary gasket 212u may be attached to the first main gasket 211 by using the multiple extrusion processes without a separate bonding agent, such that the manufacturing process may be simplified, and a bonding force between the first lower auxiliary gasket 212d or the first upper auxiliary gasket 212u and the first main gasket 211 may be increased.

In addition, it is possible to manufacture the gasket, which prevents a leak while minimizing thermal deformation, by using the multiple extrusion processes. Therefore, it is possible to suppress thermal deformation of the ion exchange membrane 100 and improve the lifespan of the ion exchange membrane 100.

While the present disclosure has been described with reference to the aforementioned exemplary embodiments, the person skilled in the art will easily understand that the present disclosure is not limited to the disclosed exemplary embodiments, but can be variously corrected and modified without departing from the scope of the appended claims.

### [Description of Reference Numerals]

| | | | |
|---|---|---|---|
| 100: | Ion exchange membrane | 200: | Gasket |
| 210: | First gasket | 211: | First main gasket |
| 212: | Second auxiliary gasket | 220: | Second gasket |
| 221: | Second main gasket | 222: | Second auxiliary gasket |

## Claims

1. An electrodialysis device comprising:
an ion exchange membrane configured to exchange ions; and
gaskets provided to be in contact with the ion exchange membrane and configured to seal the ion exchange membrane,
wherein the gaskets comprise:
a first gasket positioned at one side of the ion exchange membrane; and
a second gasket positioned at the other side of the ion exchange membrane,
wherein the first gasket comprises:
a first main gasket; and
first auxiliary gaskets configured to surround the first main gasket, and
wherein a thermal expansion rate of the first main gasket is lower than a thermal expansion rate of the first auxiliary gasket.

2. The electrodialysis device of claim 1, wherein:
the first auxiliary gaskets comprise:
a first upper auxiliary gasket positioned on an upper portion of the first main gasket; and
a first lower auxiliary gasket positioned on a lower portion of the first main gasket, and
wherein the first upper auxiliary gasket and the first lower auxiliary gasket contain the same material.

3. The electrodialysis device of claim 1, wherein:
the first main gasket contains polyethylene terephthalate (PET), and the first auxiliary gasket contains polypropylene (PP).

4. The electrodialysis device of claim 1, wherein:
the second gasket comprises:
a second main gasket; and
second auxiliary gaskets configured to surround the second main gasket, and
wherein a thermal expansion rate of the second main gasket is lower than a thermal expansion rate of the second auxiliary gasket.

5. The electrodialysis device of claim 4, wherein:
the second auxiliary gaskets comprise:
a second upper auxiliary gasket positioned on an upper portion of the second main gasket; and
a second lower auxiliary gasket positioned on a lower portion of the second main gasket, and
wherein the second upper auxiliary gasket and the second lower auxiliary gasket contain the same material.

6. A method of manufacturing an electrodialysis device, the method comprising:
manufacturing a first gasket by multiple injection molding processes;
manufacturing a second gasket by multiple injection molding processes; and
sealing an ion exchange membrane with the first gasket and the second gasket,
wherein the manufacturing of the first gasket comprises:
forming a first lower auxiliary gasket in an injection mold;
forming a first main gasket on the first lower auxiliary gasket formed in the injection mold; and
forming a first upper auxiliary gasket on the first main gasket formed in the injection mold, and
wherein a thermal expansion rate of the first main gasket is lower than a thermal expansion rate of the first lower auxiliary gasket or the first upper auxiliary gasket.

7. The method of claim 6, wherein:
the manufacturing of the second gasket comprises:
forming a second lower auxiliary gasket in the injection mold;
forming a second main gasket on the second lower auxiliary gasket formed in the injection mold; and
forming a second upper auxiliary gasket on the second main gasket formed in the injection mold, and
wherein a thermal expansion rate of the second main gasket is lower than a thermal expansion rate of the second lower auxiliary gasket or the second upper auxiliary gasket.

8. A method of manufacturing an electrodialysis device, the method comprising:
manufacturing a first gasket by multiple extrusion processes;
manufacturing a second gasket by multiple extrusion processes; and
sealing an ion exchange membrane with the first gasket and the second gasket,
wherein the manufacturing of the first gasket comprises:
manufacturing a first main gasket base plate and a first auxiliary gasket base plate having a higher thermal expansion rate than the first main gasket base plate;
supplying the first main gasket base plate and the first auxiliary gasket base plate to extrusion rollers and heating the first main gasket base plate and the first auxiliary gasket base plate; and
supplying the first main gasket base plate and the first auxiliary gasket base plate, which have passed over the extrusion rollers, to bonding rollers and attaching the first main gasket base plate and the first auxiliary gasket base plate.

9. The method of claim 8, wherein:
the manufacturing of the second gasket comprises:
manufacturing a second main gasket base plate and a second auxiliary gasket base plate having a higher thermal expansion rate than the second main gasket base plate;
supplying the second main gasket base plate and the second auxiliary gasket base plate to the extrusion rollers and heating the second main gasket base plate and the second auxiliary gasket base plate; and
supplying the second main gasket base plate and the first auxiliary gasket base plate, which have passed over the extrusion rollers, to the bonding rollers and attaching the second main gasket base plate and the first auxiliary gasket base plate.

10. The method of claim 9, wherein:
the extrusion rollers comprise:
first extrusion rollers configured to extrude the first main gasket base plate; and
second extrusion rollers configured to extrude the first auxiliary gasket base plate,
wherein the first extrusion roller is a heating roller configured to heat the first main gasket base plate, and
wherein the second extrusion roller is a combined roller configured to heat or cool the first auxiliary gasket base plate.

11. The method of claim 10, wherein:
the second extrusion rollers comprise:
a sub-cooling roller configured to cool an outer surface of the first auxiliary gasket base plate; and
a sub-heating roller configured to heat an inner surface of the first auxiliary gasket base plate.

12. The method of claim 10, wherein:
the bonding roller is a cooling roller configured to cool the first main gasket base plate and the first auxiliary gasket base plate.
